# EUROPÄISCHE PATENTSCHRIFT

(11) **EP 2 140 114 B1**
(45) Veröffentlichungstag und Bekanntmachung des Hinweises auf die Patenterteilung: **06.04.2011**
(21) Anmeldenummer: 08749652.7
(22) Anmeldetag: 22.04.2008
(51) Int. Cl.: F01D 25/16, F16C 17/04

(54) **AXIALLAGER INSBESONDERE FÜR EINEN TURBOLADER**
AXIAL BEARING PARTICULARLY FOR A TURBOCHARGER
PALIER AXIAL NOTAMMENT POUR UN TURBOCOMPRESSEUR

(30) Priorität: 24.04.2007 DE 102007019338
(43) Veröffentlichungstag der Anmeldung: 06.01.2010
(73) Patentinhaber: Continental Automotive GmbH, 30165 Hannover (DE)
(72) Erfinder: BÖNING, Ralf, 67829 Reiffelbach (DE); CLAUS, Hartmut, 67269 Grünstadt (DE); FRANKENSTEIN, Dirk, 67550 Worms (DE); FÄTH, Holger, 67136 Fussgönheim (DE); HELD, Jochen, 67295 Bolanden-Weierhof (DE); KRAUSS, Stefan, 67269 Grünstadt (DE); NOWACK, Stefan, 67292 Kirchheimbolanden (DE)
(86) Internationale Anmeldenummer: PCT/EP2008/054867
(87) Internationale Veröffentlichungsnummer: WO 2008/129046

(56) Entgegenhaltungen:
- EP-A- 0 599 520
- EP-A- 1 619 356
- DE-C- 853 990
- JP-A- 63 092 817
- JP-A- 2000 352 422
- JP-A- 2002 332 803
- US-A- 5 626 470
- US-B1- 6 698 097

## Beschreibung

Die Erfindung betrifft ein Axiallager, das insbesondere bei Turboladern, beispielsweise in Kraftfahrzeugen eingesetzt werden kann.

Im Allgemeinen dienen Turbolader dazu den Wirkungsgrad eines Verbrennungsmotors zu verbessern und damit dessen Leistung zu steigern. Im Gehäuse des Turboladers ist hierzu eine Welle um die Längsachse, beispielsweise mittels zweier Radiallager, drehbar gelagert. Auf der Welle sind entsprechend ein Turbinenrad und ein Verdichterrad angeordnet. Aufgrund von Fluidströmungen die an dem Turbinenrad und dem Verdichterrad angreifen, können starke Axialkräfte auftreten. Solche Axialkräfte können von den Radiallagern nicht geeignet aufgenommen werden, so dass entsprechend wenigstens ein Axiallager vorgesehen wird.

An die Lagerung der Welle eines Turboladers werden normalerweise sehr hohe Anforderungen gestellt. So ist der Turbolader hohen Temperaturen ausgesetzt, da beispielsweise heißes Abgas zum Antreiben des Turbinenrads verwendet wird. Des Weiteren erreicht die Welle eines Turboladers sehr hohe Drehzahlen von beispielsweise bis zu 300.000 U/min. Hierdurch müssen die sich drehenden Teile des Turboladers sehr genau ausgewuchtet sein, um das Auftreten von Schwingungen möglichst gering zu halten.

Aufgrund von schnellen Motorstarts beispielsweise bei kalten Umgebungsbedingungen können leicht Schäden an den Axial- und Radiallagern entstehen, die aus der Verzögerung der Ölzufuhr zu dem Turbolader resultieren.

Aus dem Stand der Technik, wie er in der EP 1 619 356 offenbart ist, ist ein Axiallager bekannt, bei dem um eine Durchtrittsöffnung herum Keilflächen angeordnet sind. Die Keilflächen sind dabei durch mehrere Nuten voneinander getrennt, über die die Keilflächen mit Schmieröl versorgt werden. Dabei sind einige der Nuten radial nach außen verlängert und münden in Öltaschen. Die Lagerflächen sind außerdem von einer Umfangsnut umgeben, über die das Schmieröl nach dem Durchströmen des Lagers abfließen kann, wobei die Querschnittsfläche dieser Nut kleiner ist als die Querschnittsfläche der verlängerten Nuten, um einen hinreichenden Ölfluss der Welle zu gewährleisten. Im Betrieb wird die Öltasche mit unter Druck stehendem Schmieröl beaufschlagt. Ober die Nuten strömt das Öl zu der sich drehenden Welle und wird von dieser in Umfangsrichtung verteilt, wobei auch die Nuten, die auf der anderen Seite des Axiallagers angeordnet sind, mit Schmieröl versorgt werden können.

Aus der EP 0 599 520 ist des Weiteren ein Drucklager für einen Turbolader bekannt, bei dem ein Ölreservoir über eine Bohrung mit einer Durchtrittsöffnung verbunden ist.

Drucklager_{,} bei denen außen liegende Öltaschen über Bohrungen mit einem weiter innen liegenden Segmentbereich verbunden werden, haben jedoch in der Produktion den Nachteil, dass sich Späne und Grate bilden. Insbesondere die Späne können die Bohrungen leicht verstopfen, wenn diese nicht sauber entfernt werden. Des Weiteren können Grate ebenfalls zu einer Verengung der Bohrung führen, wenn diese in die Bohrung hineinstehen.

Demnach ist es die Aufgabe der vorliegenden Erfindung, ein Axiallager bereitzustellen, das einen einfachen Aufbau aufweist und das eine geeignete Schmierung erlaubt, wobei ein Verstopfen der Ölzuführung verhindert werden kann.

Diese Aufgabe wird durch ein Axiallager mit den Merkmalen des Patentanspruchs 1 gelöst.

Demgemäß wird erfindungsgemäß ein Axiallager bereitgestellt, insbesondere für einen Turbolader, das im Wesentlichen scheibenförmige Gestalt mit einer ersten und einer zweiten Seite aufweist mit:
- einer zentrisch angeordneten Durchtrittsöffnung für eine Welle,
- mit mindestens je einem zumindest teilweise oder vollständig umlaufenden Segmentabschnitt auf der ersten und der zweiten Seite des Axiallagers, wobei der jeweilige Segmentabschnitt als konzentrisch um die Durchtrittsöffnung angeordnete Vertiefung in der jeweiligen Seite des Axiallagers ausgebildet ist und in dem jeweiligen Segmentabschnitt wenigstens ein, eine Anlagefläche aufweisendes, tragendes Segment angeordnet ist,
- wenigstens einer Öltasche auf der ersten Seite des Axial-lagers, die radial außerhalb des mindestens einen Segmentabschnites angeordnet ist,
- wobei wenigstens eine schlitzförmige, zur ersten Seite hin offene Aussparung so angeordnet und derart tief ausgebildet ist, dass sie die wenigstens eine Öltasche, für eine Ölzufuhr zu den Anlageflächen der tragenden Segmente auf beiden Seiten des Axiallagers, mit dem mindestens je einen Segmentabschnitt auf der ersten und zweiten Seite des Axiallagers verbindet.

Die Aussparung, die die Öltasche mit den Segmentabschnitten auf der ersten und er zweiten Seite des Axiallagers verbinded, ist in Form eines Schlitzes ausgebildet. Der Schlitz kann dabei derart tief in dem Axiallager vorgesehen werden, dass er eine Ölzuführung zu den Segmentabschnitten und den Anlageflächen der tragenden Segmente auf beiden Seiten des Axiallagers bereitstellt. Der Schlitz hat dabei den Vorteil, dass er sehr einfach hergestellt werden kann, beispielsweise mittels Fräsen. Alternativ kann der Schlitz auch in dem Axiallager ausgeformt sein.

Das Axiallager hat dabei den Vorteil, dass auf sehr einfache Weise eine geeignete Ölzufuhr für die Segmentabschnitte auf beiden Seiten des Axiallagers bereitgestellt werden kann. Dabei wird das Schmieröl, nicht wie in dem Stand der Technik über die Durchtrittsöffnung für die Welle, beispielsweise eines Turboladers, auf die andere Seite des Axiallagers geführt. Des Weiteren kann die nach oben offene Aussparung sehr einfach hergestellt werden, ohne dass dabei Späne oder Grate entstehen die die Aussparung verstopfen oder einengen, wie dies bei den Bohrungen im Stand der Technik der Fall ist.

Vorteilhafte Ausgestaltungen und Weiterbildungen der Erfindung ergeben sich aus den Unteransprüchen sowie der Beschreibung unter Bezugnahme auf die Zeichnungen.

In einer Ausgestaltung der Erfindung ist die Durchtrittsöffnung für die Durchführung einer Welle auf der ersten und/oder zweiten Seite mit einem Innenbund versehen. Der Innenbund dient dazu, dass das Öl nicht einfach vollkommen ungehindert aus dem Segmentabschnitt bzw. Segmentraum in die Durchtrittsöffnung fließen kann. Durch den Innenbund kann die Ölmenge in der Durchtrittsöffnung reduziert werden, ohne die Ölversorgung der tragenden Segmente bzw. Anlageflächen zu beeinträchtigen.

Das Axiallager der Erfindung eignet sich beispielsweise zur Lagerung einer Welle eines Turboladers, der in Kraftfahrzeugen oder anderen Fahrzeugen eingesetzt wird. Grundsätzlich ist der Einsatz des Axiallagers der Erfindung aber nicht auf die vorgenannten Anwendungsfälle beschränkt, sondern kann in einer Vielzahl von unterschiedlichen Bereichen eingesetzt werden, in denen Axiallager benötigt werden.

Die Erfindung wird nachfolgend anhand der in den schematischen Figuren der Zeichnungen angegebenen Ausführungsbeispiele näher erläutert. Es zeigen:

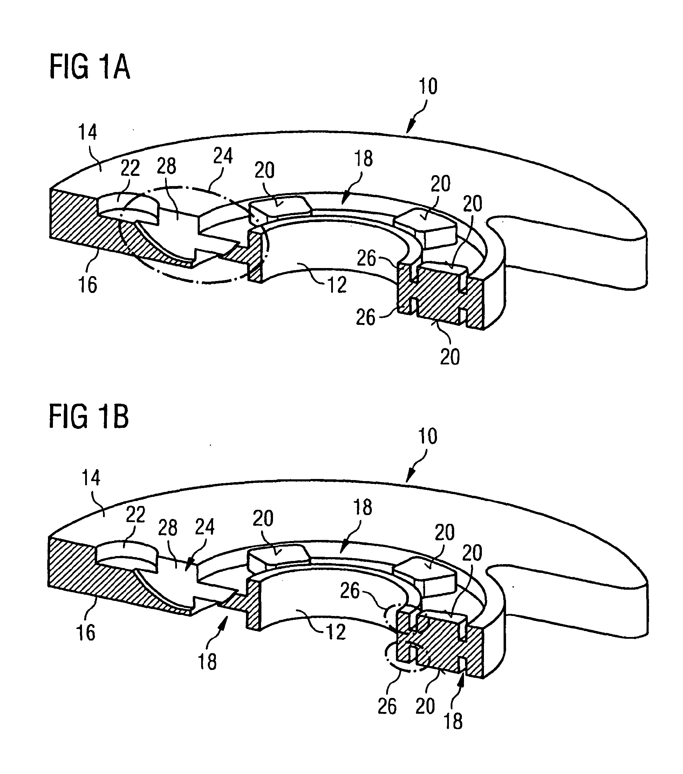

- Fig. 1A, 1B: eine perspektivische Schnittansicht eines Axi- allagers einer ersten Ausführungsform der Er- findung.

In allen Figuren sind gleiche bzw. funktionsgleiche Elemente und Vorrichtungen - sofern nichts anderes angegeben ist - mit denselben Bezugszeichen versehen worden.

In den Fig. 1A und 1B ist eine perspektivische Schnittansicht eines Axiallagers 10 gemäß einer bevorzugten Ausführungsform der Erfindung dargestellt. Das Axiallager 10 weist dabei beispielsweise eine im Wesentlichen scheibenförmige Gestalt auf.

Dabei ist das Axiallager 10 mit einer Durchtrittsöffnung 12 versehen, in der beispielsweise die Welle eines Turboladers (nicht dargestellt) hindurchgeführt werden kann. Des Weiteren weist das Axiallager 10 auf wenigstens einer ersten Seite 14 einen vorzugsweise umlaufenden Segmentabschnitt 18 bzw. Segmentraum, in Form einer Vertiefung auf. In dem Segmentabschnitt 18 sind tragende Segmente mit Anlageflächen 20 angeordnet. Die tragende Segmente bzw. Anlageflächen 20 sind dabei beispielsweise keilförmig ausgebildet und radial um die Durchtrittsöffnung 12 herum angeordnet. Die Anlageflächen 20 können jedoch auch jede andere Form aufweisen, die als Anlagefläche geeignet ist.

Das Axiallager 10 weist des Weiteren wenigstens eine Öltasche 22 auf der ersten Seite 14 des Lagers auf, wobei die Öltasche 22 radial außerhalb des Segmentabschnitts 18 angeordnet ist. Die Öltasche 22 ist dabei über eine Aussparung 24 mit der Durchtrittsöffnung 12 verbunden. Die Aussparung 24 ist dabei beispielsweise als Schlitz 28 ausgebildet, der in die Fläche der ersten Seite 14 des Axiallagers 10 beispielsweise mittels einer Fräse eingefräst und somit zur Oberfläche der ersten Seite 14 hin offen ist.

Auf der zweiten Seite 16 des Axiallagers ist ebenfalls wie auf der ersten Seite 14 ein Segmentabschnitt 18 bzw. ein Segmentraum angeordnet, sowie tragend Segmente mit Anlageflächen 20. Die Anlageflächen 20 können dabei wie die Anlageflächen 20 auf der ersten Seite 14 beispielsweise keilförmig ausgebildet sein oder eine andere geeignete Form aufweisen. Dabei kann die zweite Seite 16 ohne eine Öltasche 22 ausgebildet werden.

Die Aussparung 24 bzw. der Schlitz 28 ist hierbei derart tief in dem Axiallager 10 vorgesehen, dass er die Öltasche 22 mit den Segmentabschnitten 18 auf beiden Seiten 14, 16 des Axiallagers 20 verbindet, wie in Fig. 1A und 1B gezeigt ist. Auf diese Weise kann sehr einfach eine Ölzufuhr für beide Segmentabschnitte des Axiallagers realisiert werden.

Über die Öltasche 22 wird Schmieröl durch die Aussparung 24 bzw. den Schlitz 28 in Richtung der Durchtrittsöffnung 12 geleitet, genauer gesagt zu den Segmentabschnitten 18 und den Anlageflächen 20 der tragenden Segmente auf beiden Seiten 14, 16 des Axiallagers 10.

Weiterhin zeigen die Figuren 1A und 1B, gemäß einer vorteilhaften Ausführungsform, jeweils einen Innenbund 26 der an der Durchtrittsöffnung 12 des Axiallagers 10 angeordnet ist und die Segmentabschnitte 18 auf der ersten und zweiten Seite 14, 16 des Axiallagers 10 begrenzt und somit quasi jeweils einen Segmentraum ausbildet.

Durch die Anordnung des Innenbundes 26 direkt an der Durchtrittsöffnung 12 des Axiallagers 10 wird im Wesentlichen verhindert, dass das Schmieröl aus den Segmenträumen bzw. Segmentabschnitten 18 ungehindert in den Raum der Durchtrittsöffnung 12 für die Welle gelangt. Durch den Innenbund 26 wird die Ölmenge in der Durchtrittsöffnung 12 reduziert, ohne einen Einfluss auf die Ölversorgung der tragenden Segmente bzw. der Anlageflächen 20 zu haben. Dadurch kann auf aufwändige Anordnungen zur Ölzuführung verzichtet werden, wie sie aus dem Stand der Technik bekannt sind, um die Ölmenge gering zu halten, wobei solche Anordnungen wiederum einen direkten Einfluss auf die Tragfähigkeit eines Axiallagers haben.

Aus dem Stand der Technik war bisher bekannt, dass das Öl welches im Bereich des Axiallagers von der Welle des Turboladers herumgeschleudert wird zu einer erhöhten Verlustleistung in diesem Bereich führt. Eine Reduzierung der Ölmenge führt zu einer Reduzierung der Verluste und somit schließlich zu einer Verbesserung des Gesamtwirkungsgrades eines Turboladers.

Die Aussparung 24 in Form eines Schlitzes 28, der nach oben, zur Oberfläche der ersten Seite 14 des Axiallagers 10 hin, offen ist, hat den Vorteil, dass der Schlitz 28 als Konstruktionselement leicht in einen bestehenden Bearbeitungsprozess integriert werden kann. Außerdem können mit einem solchen Schlitz 28 Probleme vermieden werden, wie dies bei den aus dem Stand der Technik bekannten Bohrungen der Fall ist, die einen geschlossenen Umfang aufweisen. So entstehen bei der Herstellung des offenen Schlitzes 28 keine Späne und Grate mit denen die Ölzuführung eingeengt oder sogar verstopft werden kann, wie dies bei den geschlossenen Bohrungen der Fall ist. Insbesondere wenn die Bohrungen verhältnismäßig lang sind können sie nur schlecht gereinigt werden und leicht verstopfen.

Des Weiteren kann der Schlitz 28 sehr einfach mittels Fräsen hergestellt werden. Dabei entstehende Späne können problemlos entfernt werden, da der Schlitz 28 offen ist und nicht wie eine Bohrung einen geschlossenen Umfang aufweist. Alternativ ist auch denkbar, statt den Schlitz 28 mittels Fräsen herzustellen, das Axiallager 10 mit einem entsprechenden Schlitz 28 auszuformen.

Des Weiteren können gemäß der Erfindung eine, zwei, oder mehrere solcher Schlitze 28 in dem Axiallager 10 vorgesehen werden.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Die zuvor beschriebenen Ausführungsformen sind dabei miteinander kombinierbar, insbesondere einzelne Merkmale davon.

## Patentansprüche

1. Axiallager (10), insbesondere für einen Turbolader, das im Wesentlichen scheibenförmige Gestalt mit einer ersten und einer zweiten Seite (14, 16) aufweist mit:
a) einer zentrisch angeordneten Durchtrittsöffnung (12) für eine Welle,
b) mit mindestens je einem zumindest teilweise oder vollständig umlaufenden Segmentabschnitt (18) auf der ersten und der zweiten Seite (14, 16) des Axiallagers (10), wobei der jeweilige Segmentabschnitt (18) als konzentrisch um die Durchtrittsöffnung (12) angeordnete Vertiefung in der jeweiligen Seite (14, 16) des Axiallagers (10) ausgebildet ist und in dem jeweiligen Segmentabschnitt (18) wenigstens ein, eine Anlagefläche (20) aufweisendes, tragendes Segment angeordnet ist,
c) wenigstens einer Öltasche (22) auf der ersten Seite (14) des Axiallagers (10), die radial außerhalb des mindestens einen Segmentabschnittes (18) angeordnet ist,
**gekennzeichnet durch** wenigstens eine schlitzförmige, zur ersten Seite (14) hin offenen Aussparung (24, 28)
die so angeordnet und derart tief ausgebildet ist, dass sie die wenigstens eine Öltasche (22), für eine Ölzufuhr zu den Anlageflächen (20) der tragenden Segmente auf beiden Seiten (14,16) des Axiallagers (10), mit dem mindestens je einen Segmentabschnitt (18) auf der ersten und zweiten Seite (14, 16) des Axiallagers (10) verbindet.

2. Axiallager nach Anspruch 1,
**dadurch gekennzeichnet,**
**dass** der Schlitz (28) mittels Fräsen hergestellt ist oder in dem Axiallager (10) ausgeformt ist.

3. Axiallager nach einem der Ansprüche 1 oder 2,
**dadurch gekennzeichnet,**
**dass** die Durchtrittsöffnung (12) für die Durchführung einer Welle auf der ersten und/oder zweiten Seite (14, 16) einen Innenbund (26) aufweist, der den jeweiligen Segmentabschnitt (18) zu der Durchtrittsöffnung (12) hin begrenzt.

4. Turbolader mit wenigstens einem Axiallager mit Merkmalen gemäß einem der Ansprüche 1 bis 3.

## Claims

1. Axial bearing (10), in particular for a turbocharger, which substantially has a plate-like shape with a first side and a second side (14, 16), comprising:
a) a centrically arranged through-hole (12) for a shaft,
b) with at least one at least partially or fully encircling segment section (18) each on the first side and second side (14, 16) of the axial bearing (10), the respective segment section (18) being constructed as an indentation concentrically arranged around the through-hole (12) on the respective side (14, 16) of the axial bearing (10), and with at least one supporting segment comprising a contact surface (20) in the respective segment section (18),
c) at least one oil pocket (22) on the first side (14) of the axial bearing (10) which is arranged radially outside of the at least one segment section (18),
**characterised by** at least one slotted recess (24, 28) open toward the first side (14) and which is arranged in such a way and is formed to such a depth that to supply oil to the contact surfaces (20) of the supporting segments on both sides (14, 16) of the axial bearing (10), it connects the at least one oil pocket (22), to the at least one segment section (18) each on the first side and second side (14, 16) of the axial bearing (10) .

2. Axial bearing according to claim 1,
**characterised in that** the slot (28) is produced by means of milling or is shaped into the axial bearing (10).

3. Axial bearing according to one of claims 1 or 2, **characterised in that** for implementing a shaft on the first and/or second side(s) (14, 16) the through-hole (12) has an inner collar (26) which delimits the respective segment section (18) with respect to the through-hole (12).

4. Turbocharger comprising at least one axial bearing having features according to one of claims 1 to 3.

## Revendications

1. Palier axial (10) , en particulier pour un turbocompresseur, qui présente une forme sensiblement discoïde avec une première face et une seconde face (14, 16), comprenant :
a) une ouverture de passage (12) ménagée centralement pour un arbre,
b) au moins respectivement une section segmentée (18) en partie ou en totalité périphérique sur les première et seconde faces (14, 16) du palier axial (10), dans lequel la section segmentée (18) respective se présente sous la forme d'un creux ménagé de manière concentrique autour de l'ouverture de passage (12) dans le côté respectif (14, 16) du palier axial (10) et au moins un segment porteur présentant une surface d'appui (20) est aménagé dans la section segmentée (18) respective,
c) au moins une poche à huile (22) sur la première face (14) du palier axial (10), qui est ménagée radialement hors de la au moins une section segmentée (18),
**caractérisé par** au moins un évidement (24, 28) en forme de fente, ouvert vers la première face (14), qui est ménagé et conformé en profondeur de manière qu'il raccorde la au moins une poche à huile (22), destinée à alimenter en huile les surfaces d'appui (20) des segments porteurs sur les deux faces (14, 16) du palier axial (10), à la au moins une section segmentée (18) respective sur les première et seconde faces (14, 16) du palier axial (10).

2. Palier axial selon la revendication 1,
**caractérisé en ce que**
la fente (28) est ménagée par fraisage ou formée dans le palier axial (10) .

3. Palier axial selon l'une quelconque des revendications 1 ou 2,
**caractérisé en ce que**
l'ouverture de passage (12) présente, pour réaliser un arbre sur la première face et/ou la seconde face (14, 16), un épaulement interne (26) qui délimite la section segmentée (18) respective vers l'ouverture de passage (12).

4. Turbocompresseur avec au moins un palier axial ayant les caractéristiques selon l'une quelconque des revendications 1 à 3.
